Europäisches Patentamt

European Patent Office

Office européen des brevets

(11) Publication number: **0 081 784**
**B1**

# EUROPEAN PATENT SPECIFICATION

(45) Date of publication of patent specification: **06.09.89**

(21) Application number: **82111260.4**

(22) Date of filing: **06.12.82**

(51) Int. Cl.⁴: **G 06 F 15/38,** G 06 F 15/20,
G 09 G 1/00

(54) Displaying and correcting method for machine translation system.

(30) Priority: **14.12.81 JP 200192/81**

(43) Date of publication of application:
**22.06.83 Bulletin 83/25**

(45) Publication of the grant of the patent:
**06.09.89 Bulletin 89/36**

(84) Designated Contracting States:
**DE FR GB**

(56) References cited:
**GB-A-1 448 211**
**US-A-3 271 743**
**US-A-4 193 119**

(73) Proprietor: **Hitachi, Ltd.**
**5-1, Marunouchi 1-chome**
**Chiyoda-ku Tokyo 100 (JP)**

(72) Inventor: **Kaji, Hiroyuki**
**4-5-7-103, Tsurumaki**
**Tama-shi Tokyo (JP)**
Inventor: **Nitta, Yoshihiko**
**1-5-8, Kataseyama**
**Fujisawa-shi Kanagawa-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

**Description**

The present invention relates to a displaying method for machine translation systems wherein a text of a first language (for example, English) is automatically translated into sentences of a second language (for example, Japenese).

In the automatic translation systems employing a digital computer it is indispensable to check and correct the result translated by the computer. Heretofore, a general purpose terminal equipment or a word processor have been used for the correction. Since, however, these systems do not have functions suitable for the correction of the translation, the efficiency of correction was very inferior.

It is the object of the present invention to provide a display method which affords functions suitable for a translation system and by which both a text described in a source language and a text described in an object language are simultaneously displayed on a display unit, and in which when one text is scrolled, the corresponding text can be simultaneously scrolled.

Furthermore, phrasal elements intended to be amended in one text and the corresponding phrasal elements in the other text are to be displayed in an aspect optically differing from the other text of both languages. Corrections, such as amendments, insertions and deletions, are to be made in the unit of phrasal element, and not in the unit of a character in a displayed text.

The above object is achieved according to claim 1. The dependent claims relate to preferred embodiments.

The display method for machine translation systems in which translation processing is executed in processing means, comprises the following steps:

(a) dividing a sentence in a source language into source phrasal elements having certain roles syntactically or semantically,

(b) assigning identifications to the respective source phrasal elements, and identifications of separations between said respective phrasal elements or between sentences,

(c) dividing a sentence in a target language, which has been translated from said source language sentence, into target phrasal elements having the same linguistic meanings as the source phrasal elements,

(d) assigning the same identifications to the respective target phrasal elements, and identifications of separations as assigned to the source language,

(e) storing corresponding parts of both texts in respective source and target text areas of a memory in such a way that on an address,

(e1) for a character of a phrasal element a character-code is stored together with a flag bit having a first value, a phrasal element identification or sentence number is stored together with a flag bit having a second value, and is stored together with a second flag bit indicating whether or not the corresponding phrasal element has been revised,

(f) storing a display start address of a source text, a display start address of the target text and the sentence number and the identification of a phrasal element to be displayed in a manner optically differing from the other text into a parameter area of the memory,

(g) storing a cursor address of a cursor in the source text area or the target text area into the parameter area of the memory when the cursor lies on a first display area allotted to the source text or on a second display area allotted to the target language of the display unit,

(h) displaying the text stored in the source text area on the first display area and displaying the text stored in the target text area on the second display area of the display unit by means of the display start addresses, and

(i) displaying the corresponding phrasal elements of the source text and the target text which have the identification stored in the parameter area of the memory in manner optically differing from the other text, whereby these phrasal elements are identified on the basis of the position of the cursor, and the sentence numbers and the phrasal element identifications thereof are respectively set in the optically differently displayed sentence number and the optically differently displayed phrasal element identifications so that the address of the optically differently displayed phrasal element in the target text can be found.

The expression "phrasal element" is defined as the minimum unit having a linguistic meaning, for example, a string of nouns, an auxiliary verb+a verb, an article+a noun, a preposition+a noun, and an adjective+a noun.

The invention will now be explained with reference to the drawings.

Figure 1 is a diagram showing the general arrangement of a machine translation system to which the present invention can be applied;

Figures 2(A) and 2(B) are diagrams showing an example of a text transmission from a host computer to a terminal equipment;

Figures 3(A), 3(B) and 3(C) are diagrams showing the structure of words and various parameters in a memory;

Figures 4(A), 4(B) and 4(C) are diagrams showing examples of stored contents in the text memory;

Figure 5 is a diagram showing an example of text display;

Figure 6 is a diagram of a keyboard panel;

Figure 7 is a flowchart of the processing of writing the transmission text from the host computer into the memory;

Figure 8 is a flowchart of the processing of displaying the text in the memory on a CRT;

Figure 9 is a flowchart of the processing of updating the content of the memory in accordance with an input from a keyboard;

Figure 10 is a flowchart of processing of transmitting a revised text to the host computer; and

Figure 11 is a diagram showing an example of data transmitted to the host computer.

In the following, the method of the invention will be described with reference to an example whereby it is assumed that the source language is English, and the target language is Japanese.

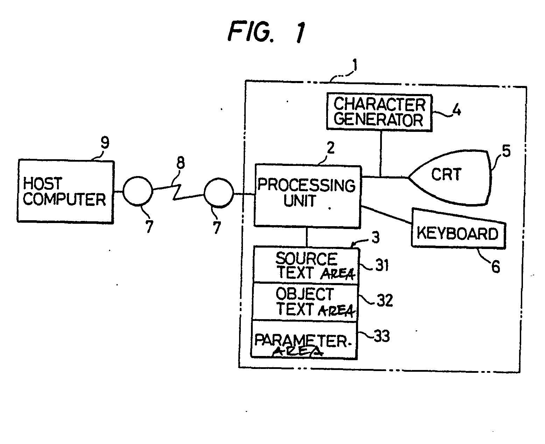

Figure 1 shows an example of the arrangement of a system which may be used for performing the text display and correction method according to the present invention. The system includes a terminal 1 and a host computer 9.

The terminal 1 is composed of a processing unit 2, a memory 3, a character generator 4, a CRT 5 and a keyboard 6, and is connected to the host computer 9 through modems 7 as well as a communication line 8. Translation is executed by the host computer 9, and an English text and the translated Japanese text are transmitted to the terminal 1. In the terminal 1, the English text and the Japanese text are simultaneously displayed, and the user revises the Japanese text. The revised text is transmitted to the host computer 9, and is stored in a file.

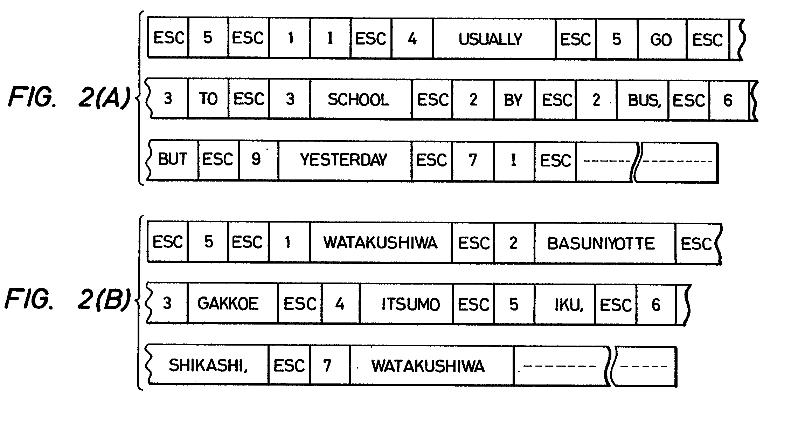

In the automatic translation processing in the host computer 9, the English text corresponding to the source language is analyzed and is divided into phrasal elements having certain syntactic or semantic roles. Japanese equivalents also called phrasal elements are allotted to the respective phrasal elements, and the phrasal elements are arranged in a sequence acceptable as Japanese, whereby the Japanese text is generated. The details of this translation processing are described in US—A—4 641 264. Herein identifications ID are assigned to the phrasal elements, and data as exemplified in Figure 2 are transmitted to the terminal 1. Figure 2(A) is an example of English text, and Figure 2(B) is the Japanese text. A Japanese character is coded with 2 bytes, although, in Fig. 2(b), it is expressed with a number of alphabetical characters according to Italic notation. ESC (escape) denotes the separation between one phrasal element and the next phrasal element, or the separation between sentences. In the data, the byte following the ESC code is the phrasal element identification ID. At the head of a sentence, the ESC code and a sentence number are affixed. Since the sentence number is always held between the ESC codes, it can be distinguished from a phrasel element identification ID. The addition of the sentence number makes it unnecessary for the phrasal element ID to be unique in the text. The phrasal element has only to be unique within each sentence. Accordingly, the phrasal element ID can be coded with several bits.

The memory 3 includes a source (English) text area 31, a target (Japanese) text area 32, and a parameter area 33.

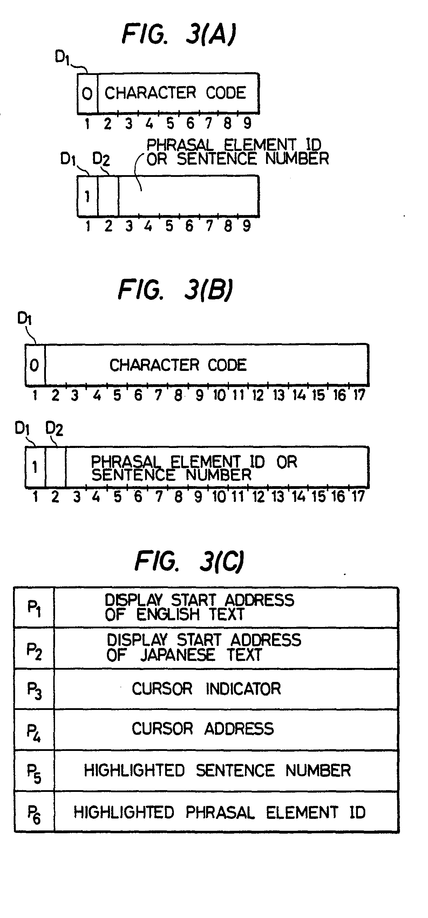

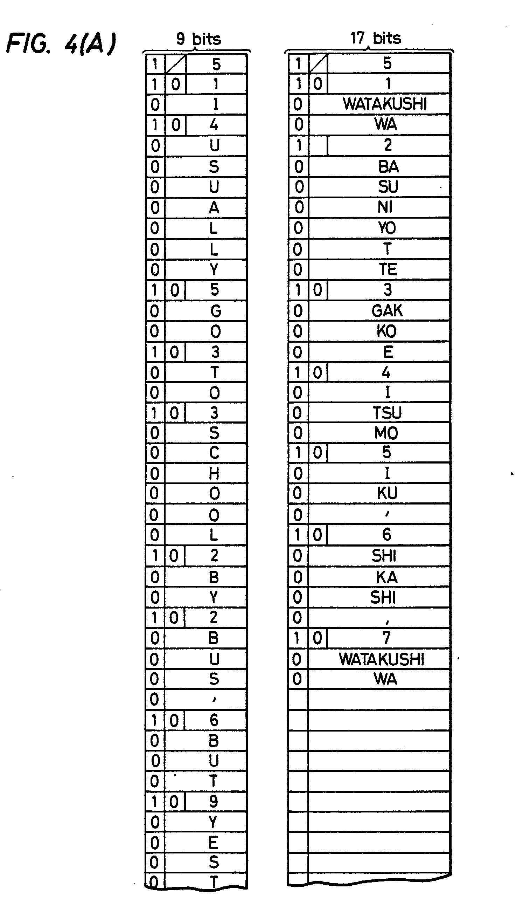

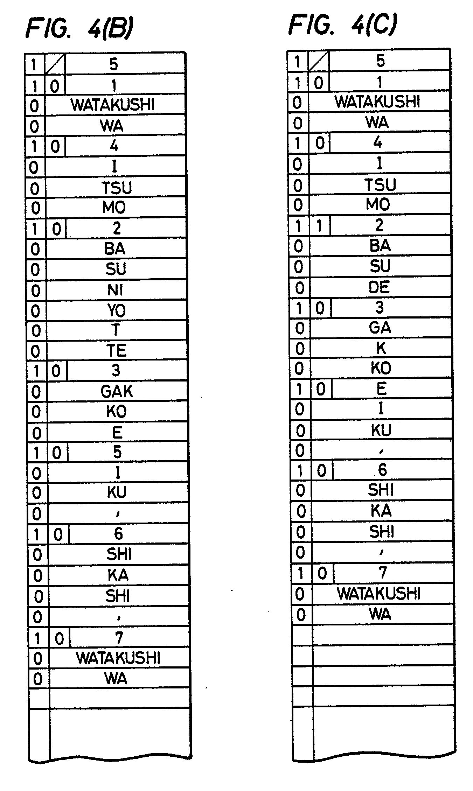

The source text area 31 is composed of 9-bit words, and the target text area 32 is composed of 17-bit words. They are individually given addresses 1, 2, 3, … . Figure 3(A) shows a word in the source text area (31. A content expressed by the word differs depending upon whether the first

bit $D_1$ of the particular word is "0" or "1". When the first bit $D_1$ is "0", the second to ninth bits form a code which expresses a character in the text. When the first bit is "1", the third to ninth bits express a phrasal element ID or a sentence number. Whether the phrasal element ID or the sentence number is expressed, is readily understood from the following. That is, only the preceding word in the case where two words having the first bits $D_1$ of "1" have occurred in succession is the sentence number. The second bit $D_2$ of the word expressing the phrasal element ID is used as a flag which indicates if the corresponding phrasal element has been revised. Words in the target text area 32 are shown in Figure 3(B). It is the same as in the case of the source text area 31 that a content expressed by the particular word differs depending upon the first bit $D_1$. Figure 4(A) shows stored contents in the text areas 31 and 32 of the memory 3 in the case of Figure 2.

The various parameters which are stored in the memory 3, are shown in Figure 3(C). The display start address $P_1$ of the source text and the display start address $P_2$ of the target text indicate the head addresses of those parts of the respective texts which are to be displayed on the CRT 5. A cursor position indicator (flag) $P_3$ is set to "0" when the cursor lies on the English text, and to "1" when it lies on the Japanese text. The cursor address $P_4$ indicates the address of the cursor on the text. In addition, the sentence number and the phrasal element ID of the phrasal element to be displayed unlike the other parts are respectively stored in a highlighted sentence number $P_5$ and a highlighted phrasal element ID $P_6$.

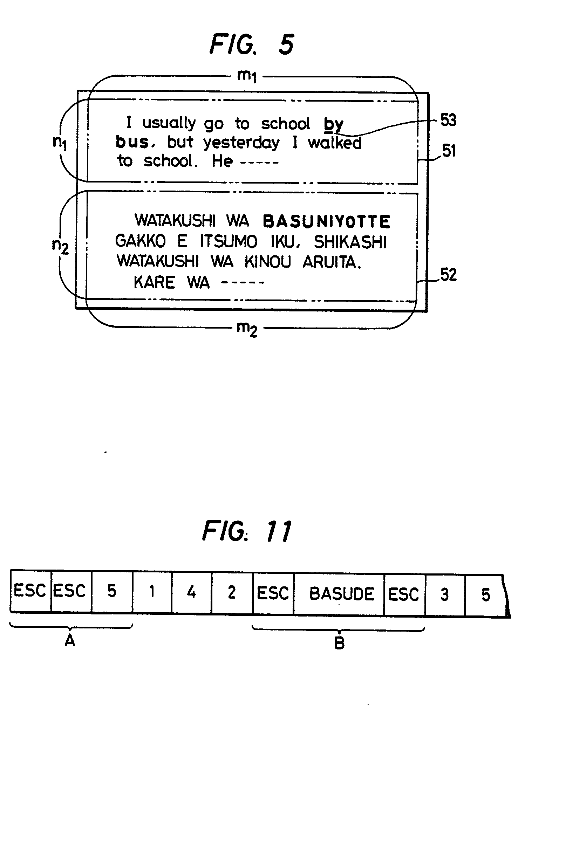

A shown in Figure 5, the screen of the CRT 5 is partitioned into a first (English text) display area 51 and a second (Japanese text) display area 52. The respective areas can display $m_1$ (characters/line)$n_1$ (lines) and $m_2$ (characters/line)$n_2$ (lines). Owing to processing to be described later, when one text is scrolled, the other text is scrolled interlockingly, so that the corresponding parts are displayed at all times. Moreover, the phrasal element in the cursor position is highlighted (by way of example, it is displayed at a brightness higher than that of the other phrasal elements). Since, in Figure 5, the cursor 53 lies on the phrasal element "by bus" in the English text, this phrasal element and the corresponding phrasal element "BASU NI YOTTE" in the Japanese text are highlighted.

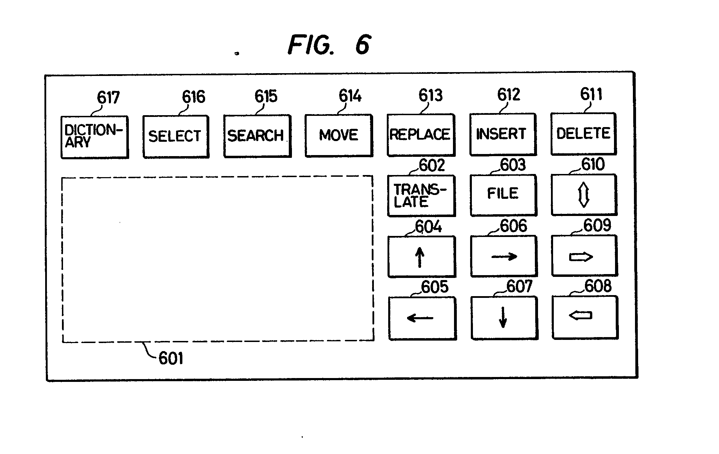

As shown in Figure 6, the keyboard 6 of Fig. 1 is equipped with character keys 601, and besides, various function keys 602 and 617.

The functions of the processing unit 2 are (1) the processing of writing the English text and the Japanese text transmitted from the host computer 9 into the memory 3, (2) the processing of displaying the texts in the memory 3 on the CRT 5, (3) the processing of updating the contents of the memory 3 in accordance with an input given from the keyboard 6, and (4) the processing of transmitting the (revised) texts in the memory 3 to the host computer 9. These functions will be explained hereinbelow.

(1) Processing of writing transmitted texts from the host computer 9 into the memory 3:

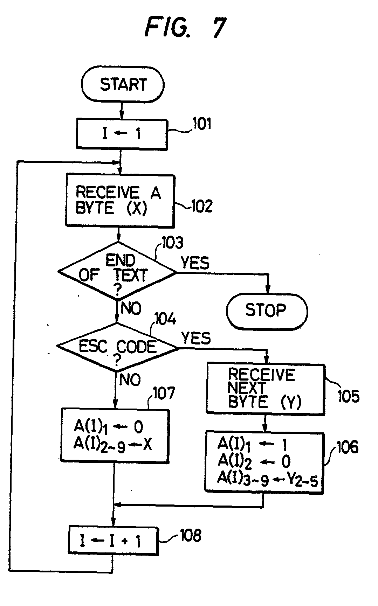

Figure 7 shows a flowchart of the processing in which the English text transmitted from the host computer 9 is written into the English text area of the memory 3. Quite the same applies for the Japanese text. In the figure, symbol I is an index indicative of the address of the source (English) text area 31, and symbol A(I) indicates the word of the address I of the source text area 31. After an initial value "1" has been first set in I (101), transmitted data are received byte by byte (102): Unless the data get to the end (103), whether or not the received byte is the ESC code is decided (104). When it is the ESC code, the next byte is decided to be the sentence number or the phrasal element ID. After this byte is received (105) the word in which the first bit $A(I)_1$ is "1", the second bit $A(I)_2$ is "0" and the third—ninth bits $A(I)_{3-9}$ are the sentence number or the phrasal element ID, is written into the memory 3 (106). When the byte is not either of the ESC code sentence number and phrasal element ID, it is the character code. Therefore, the word in which the first bit $A(I)_1$ is "0", and the second—ninth bits $A(I)_{2-9}$ are this character code, is written into the memory (107). In either case, after the word A(I) has been written in the address I, "1" is added to I (108), and the processing flow advances to the reception of the next byte (102).

(2) Processing of displaying text stored in the memory 3 on the CRT 5:

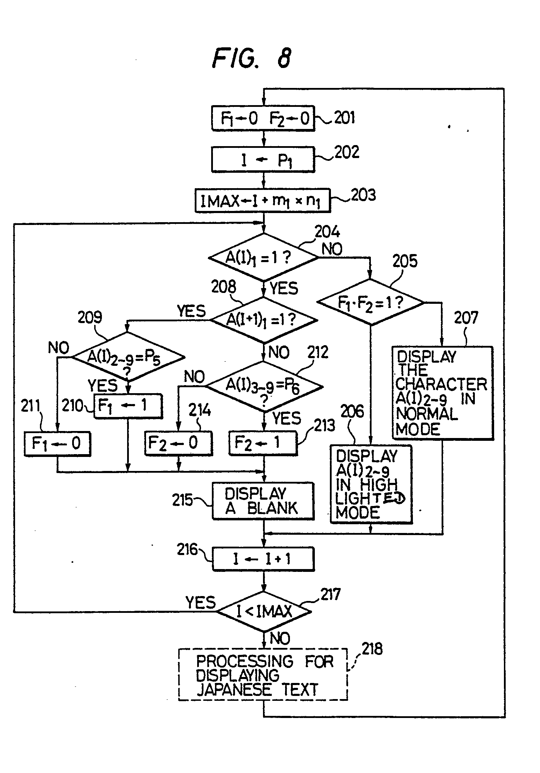

Figure 8 shows a flowchart of the processing of displaying the text. Only the processing of the English text is illustrated in detail, and the processing of Japanese text is omitted because it is similar to that of the English text. In the figure, $F_1$ and $F_2$ are flags which indicate if characters being processed are to be highlighted. First, "0" is set in both $F_1$ and $F_2$ (201), and the display start address $P_1$ and the display end address $P_1+m_1\times n_1$ of the text are respectively set in I and IMAX (202 and 203). Whether or not the word A(I) of the address I is the character code is then decided (204). When it is the character code, this code is sent to the character generator 4, and the character is displayed on the CRT 5. In this case, when both the flags $F_1$ and $F_2$ are "1" (205), the character is highlighted (206), otherwise it is displayed in a normal mode (207). On the other hand, in a case where A(I) is the sentence number or the phrasal element ID, whether it is the former or the latter can be distinguished by investigating the next word A(I+1) (208). In the case of the sentence number, it is compared with the highlighted sentence number $P_5$ (209). When they coincide, "1" is set in $F_1$ (210), and when not, "0" is set in $F_1$ (211). In the case of the phrasal element ID, it is compared with the highlighted phrasal element ID $P_6$ (212). When they coincide, "1" is set in $F_2$ (213), and when not, "0" is set in $F_2$ (214). The word which is the sentence number or the phrasal element ID, is displayed as a blank on the CRT screen (215). After A(I) has been displayed, "1" is added to I (216). If I is within the display range (217), the flow advances to the processing of the next word. If I is beyond the display range, the flow shifts to the processing of displaying the Japanese text (218).

(3) Processing of updating the content of the memory 3 in accordance with input from the keyboard 6:

Inputs from the keyboard 6 are broadly classified into alteration of the display range or the highlighted phrasal element consequently upon movement of the cursor, and revision of the text.

First, the movement of the cursor will be described. The keys 604—610 in Figure 6 are cursor moving keys. There will now be explained a case where the cursor position flag $P_3$ is "0", namely, a case where the cursor lies on the English text. Also when the cursor position flag $P_3$ is "1", operations are similar. When the key 605 is depressed, the cursor address $P_4$ is decreased by one. However, when $P_4$ is (a multiple of $m_1$) +1, it remains unchanged. When the key 606 is depressed, "1" is added to $P_4$. However, when $P_4$ is a multiple of $m_1$, it remains unchanged. When the key 604 is depressed, $P_4$ is decreased by $m_1$. When the key 607 is depressed, $m_1$ is added to $P_4$. Besides, when the key 608 is depressed, the English text area is scanned in the backward direction from the current cursor address $P_4$, so as to find the word which is the phrasal element ID. The address of the second occurring phrasal element ID+1 is set in $P_4$. When the key 609 is depressed, the English text area is scanned in the forward direction from the current cursor address $P_4$, so as to find the word which is the phrasal element ID. The address of the first occurring phrasal element ID+1 is set in $P_4$. Further, when the key 610 is depressed, the cursor position flag $P_3$ is inverted into "1", and simultaneously, the Japanese text is scanned to find the highlighted phrasal element, the address of the first character of which is set in the cursor address $P_4$.

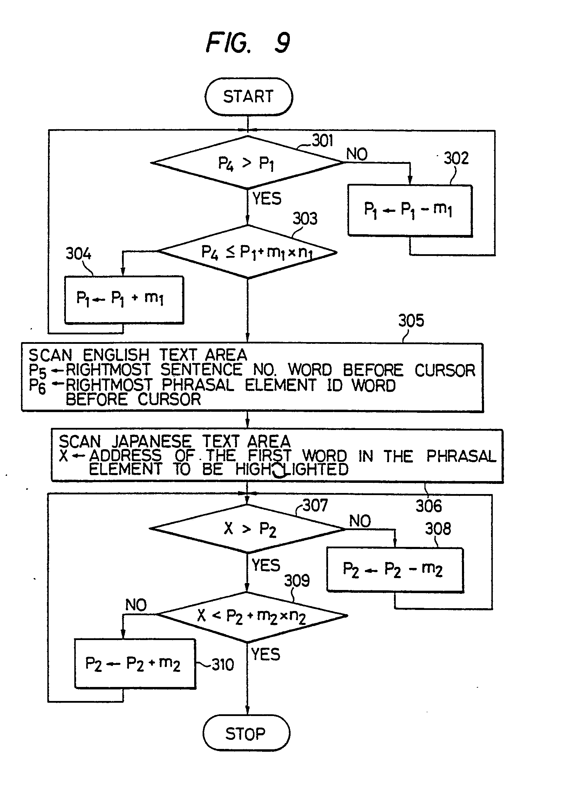

When the cursor has been moved, it becomes necessary to scroll the screen or to alter the highlighted phrasal element, so that the parameters $P_1$, $P_2$, $P_5$ and $P_6$ stored in the memory 3 are updated. The flowchart of this processing is shown in Figure 9. the figure concerns the case where the cursor lies on the English text. When the cursor address $P_4$ is smaller than the display start address $P_1$ of the English text (301), $P_1$ is decreased by $m_1$ (302). When $P_4$ is greater than the display end address $P_1+m_1\times n_1$ of the English text (303), $P_1$ is increased by $m_1$ (304). Subsequently, the phrasal element to be highlighted is identified on the basis of the position of the cursor, and the sentence number and the phrasal element ID thereof are respectively set in the highlighted sentence number $P_5$ and the highlighted phrasal element ID $P_6$ (305). Further, the address X of the highlighted phrasal element in the Japanese text is found (306). When X is smaller than the display start address $P_2$ of the Japanese text (307), $P_2$ is decreased by $m_2$ (308), and when X is greater than the display end address $P_2+m_2\times n_2$ of the English text (309), $P_2$ is increased by $m_2$ (310).

In the next place, the function of revising the text will be explained. A 'delete' key 611, an 'insert' key 612, a 'replace' key 613 and a 'move' key 614 are provided for the revision of the text. The deleting, inserting or replacing operation is such that, after the pertinent part has been appointed with the cursor, a new character string (except the case of deletion) is inputted through the character keys 601. In inputting the Japanese character queue, such a method as "kana"-to-chinese character conversion is employed. When the Japanese text has been revised, not only the character data of the text area are updated, but also "1" is set in the second bit of the word containing the phrasal element ID of the revised phrasal element. In addition, the 'move' key 614 serves to change the order of phrasal elements. When the phrasal element to be moved, and the destination of the movement is appointed with the cursor, phrasal element data within the text area, inclusive of the phrasal element ID, are moved. Figures 4(B) and 4(C) illustrate examples of the text revision. Figure 4(B) shows stored contents in the case where, in the Japanese text of Figure 4(A), the phrasal element of "ITSUMO" has been moved between "WATAKUSHIWA" and "BASUNIYOTTE". Figure 4(C) shows stored contents in the case where "NIYOTTE" of "BASUNIYOTTE" in Figure 4(B) has been replaced with "DE".

(4) Processing of transmitting the revised Japanese text in the memory 3 to the host computer 9:

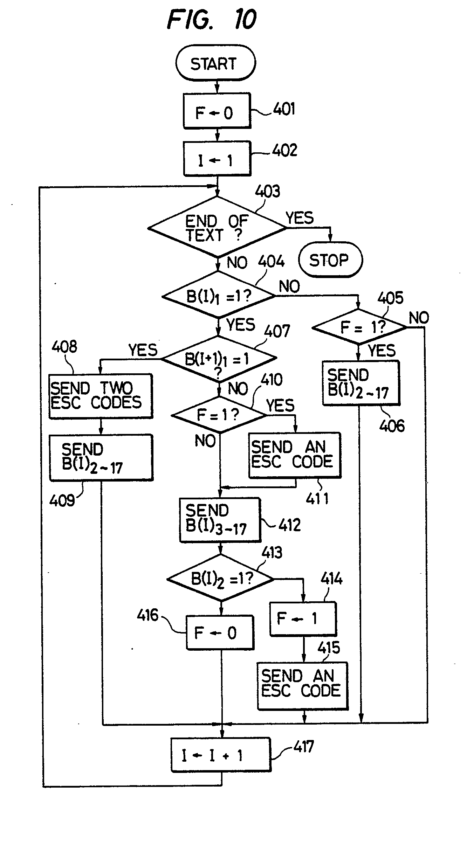

Figure 10 shows a flowchart of the processing. In the figure, symbol I denotes an index which indicates an address in the Japanese text area, and symbol B(I) indicates the word of the address I of the Japanese text area. In addition, F is a flag which indicates if a phrasal element being processed has been revised. After "0" has been set in F (401), and "1" as an initial value has been set in I (402), the following processing is executed till the end of the text (403). Whether or not B(I) is the character code, is then investigated (404). When it is the character code, this character code is sent (406) only in case of the character of the revised phrasal element (405). When B(I) is the sentence number or the phrasal element ID, either is decided on the basis of B(I+1) (407). In the case of the sentence number, two ESC codes are sent in succession (408), whereupon sentence number data are sent (409). In the case of the phrasal element ID, they are sent (412). However, whether or not the preceding data sent are character data is decided (410), and in the case of the character data, the ESC code indicative of the end of the character data is sent before the phrasal element ID (411). After the phrasal element ID has been sent, whether or not the particular phrasal element has been revised is investigated (413). When it has been revised, "1" is set in F (414), and the ESC code indicating the start of the character data to be sent is subsequently sent (415). When the particular phrasal element has not been revised, "0" is set in F (416). In either case, after one word has been processed, "1" is added to I (417) so as to advance the flow to the processing of the next word.

Figure 11 shows an example of transmission data. This corresponds to the text in Figure 4(c). In Figure 11, A denotes the sentence number, and B the phrasal element subjected to the revision. The host computer 9 can restore the text on the basis of the facts that when the two ESC codes have succeeded, the sentence number follows, and that when one ESC code has appeared, the character data appears until the next ESC code appears, and by regarding the others as the phrasal element ID's.

Acccording to the present invention, the following effects are achieved:

(1) The correction of a translated text can be efficiently performed owing to the functions of simultaneously displaying and interlockingly scrolling a text in the source language and the translated text in the target language, the function of dynamically displaying the corresponding relationship between the texts (in phrasal element unit) by the movement of a cursor, the function of moving phrasal elements, etc.

(2) To the end of storing the corresponding relationship of both the texts required for realizing the above functions, merely one bit may be added to each word of a refresh memory. Moreover, in revising the text, any special processing for holding the corresponding relationship is not required. Therefore, the responsiveness is good.

(3) The quantity of transmission data in the case of sending the revised text to a host computer can be remarkably compressed.

## Claims

1. A display method for machine translation systems, in which translation processing is executed in processing means, comprising the following steps:

(a) dividing a sentence in a source language into source phrasal elements having certain roles syntactically or semantically,

(b) assigning identifications (ID) to the respective source phrasal elements, and identifications of separations (ESC) between said respective phrasal elements or between sentences,

(c) dividing a sentence in a target language, which has been translated from said source language sentence, into target phrasal elements having the same linguistic meanings as the source phrasal elements,

(d) assigning the same identifications (ID) to the respective target phrasal elements, and identifications of separations (ESC), as assigned to the source language,

(e) storing corresponding parts of both texts in respective source and target text areas (31, 32) of a memory (3) in such a way that on an address,

(e1) for a character of a phrasal element a character code is stored together with a flag bit D1 having a first value, a phrasal element identification or sentence number is stored together with a flag bit D1 having a second value, and is stored together with a second flag bit D2 indicating whether or not the corresponding phrasal element has be revised,

(f) storing a display start address $(P_1)$ of a source text, a display start address $(P_2)$ of the target text and the sentence number $(P_5)$ and the indentification $(P_6)$ of a phrasal element to be displayed in a manner optically differing from the other text into a parameter area (33) of the memory (3),

(g) storing a cursor address $(P_4)$ of a cursor in the source text area (31) or the target text area (32) into the parameter area (33) of the memory (3) when the cursor lies on a first display area (51) allotted to the source text or on a second display area (52) allotted to the target language of the display unit (5),

(h) displaying the text stored in the source text area (31) on the first display area (51) and displaying the text stored in the target text area (32) on the second display area (52) of the display unit by means of the display start addresses ($P_1$ and $P_2$), and

(i) displaying the corresponding phrasal elements of the source text and the target text which have the identification stored in the parameter area (33) of the memory (3) in a manner optically differing from the other text, whereby these phrasal elements are identified on the basis of the position of the cursor, and the sentence numbers $(P_5)$ and the phrasal element identifications (ID) thereof are respectively set in the optically differently displayed sentence number $(P_5)$ and the optically differently displayed phrasal element identifications $(P_6)$ so that the address of the optically differently displayed phasal element in the target text can be found.

2. The display method according to claim 1, further comprising the following steps:

—deciding whether or not the cursor address $(P_4)$ lies between the display start address $(P_1)$ of the source text or the display start address $(P_2)$ of the target text and a display end address of the source or target text;

—shifting the display start address ($P_1$, $P_2$) of the source or target text by a predetermined value when the cursor address $(P_4)$ does not lie between the start address ($P_1$, $P_2$) and the end address;

—deciding whether or not the address of the target or source phrasal element having the same identification as that of the source or target phrasal element at the cursor address $(P_4)$ lies between the display start address $(P_1)$ and the display end address of the target or source text, when the cursor lies on the first display area (51), and deciding whether the same address of the target phrasal element lies between the display

start address $(P_1)$ and the display end address of the source text when the cursor lies on the first or second display area (31, 32), and

—shifting the display start address ($P_1$, $P_2$) of the target or source text by a predetermined value when the afore-mentioned address of the target or source phrasal element does not lie between the display start address and the display end address.

3. The display method according to claim 2, further comprising the steps of

—storing the identification of the phrasal element at the cursor address $(P_4)$ in the parameter area (33) of the memory (3), and

—displaying the phrasal element which has its identification (ID) stored in the parameter area (33) of the memory (3) in a manner optically different from the other text.

4. The display method according to one of claims 1 to 3, further comprising the step of altering the position in the target text or the contents of the displayed target phrasal element.

5. The display method according to one of claims 1 to 4, characterized in that a host computer (9) is used as processing means.

**Patentansprüche**

1. Anzeigeverfahren für ein maschinelles Übersetzungssystem, in dem eine Sprachübersetzung mit maschinellen Verarbeitungsmitteln durchgeführt wird, das folgende Schritte aufweist:

(a) Einteilen eines in einer Quellensprache vorliegenden Satzes in Quellensatzelemente, die bestimmte syntaktische oder semantische Bedeutungen haben,

(b) Zuteilen von Identifikatoren (ID) den jeweiligen Quellensatzelementen sowie Trennidentifikatoren (ESC) für Trennungen zwischen den jeweiligen Satzelementen oder Sätzen,

(c) Einteilen eines in einer Zielsprache vorliegenden Satzes, der von dem Quellensprachensatz übersetzt wurde, in Zielsatzelemente derselben linguistischen Bedeutung als die der Quellensatzelemente,

(d) Zuteilen derselben Identifikatoren (ID) den jeweiligen Zielsatzelementen und Trennidentifikatoren (ESC), wie sie der Quellensprache zugeteilt wurden,

(e) Abspeichern entsprechender Teile beider Texte jeweils in Quellen- und Zieltextbereichen (31, 32) eines Speichers (3), in solcher Weise, daß unter einer Adresse

(e1) für ein Zeichen eines Satzelementes ein Zeichencode zusammen mit einem Kennzeichenbit (D1), das einen ersten Wert hat, ein Satzelementidentifikator oder eine Satznummer zusammen mit einem Kennzeichnebit (D1), das einen zweiten Wert hat, und zusammen mit einem zweiten Kennzeichenbit (D2), das angibt, ob die entsprechenden Satzelemente überarbeitet wurden, abgespeichert werden,

(f) Speichern einer Anzeigestartadresse $(P_1)$ eines Quellentextes, einer Anzeigestartadresse $(P_2)$ des Zieltextes und der der Satznummer $(P_5)$

sowie des Identifikators (P$_6$) eines in einer optisch von dem anderen Text unterschiedlichen Weise anzuzeigenden Satzelementes in einen Parameterbereich (33) des Speichers (3),

(g) Speichern einer Schreibmarkenadresse (P$_4$) einer Schreibmarke innerhalb des Quellentextbereichs (31) oder des Zieltextbereichs (32) in dem Parameterbereich (33) des Speichers (3), wenn die Schreibmarke auf einem dem Quellentext zugeteilten ersten Anzeigebereich (51) oder auf einem zweiten Anzeigebereich (52) liegt, der der Zielsprache der Anzeigeeinheit (5) zugeteilt ist,

(h) Anzeigen des in dem Quellentextbereich (31) gespeicherten Textes auf dem ersten Anzeigebereich (51) und Anzeigen des in dem Zieltextbereich (32) gespeicherten Textes au dem zweiten anzeigebereich (52) der Anzeigeeinheit mittels der Anzeigestartadressen (P$_1$ und P$_2$), und

(i) Anzeigen der korrespondierenden Satzelemente des Quellentextes und des Zieltextes, die die im Parameterbereich (33) des Speichers (3) gespeicherten Identifikatoren haben, so daß sie sich optisch von dem anderen Text unterscheiden, wobei diese Satzelemente aufgrund der Schreibmarkenposition gekennzeichnet sind, und wobei deren Satznummern (P$_5$) und deren Satzelementidentifikatoren (ID) jeweils in die in optisch verschiedener Weise angezeigte Satznummer (P$_5$) und die optisch in unterschiedlicher Weise angezeigte Satzelementidentifikatoren (P$_6$) gesetzt sind, so daß die Adresse des optisch unterschiedlich angezeigten Satzelements im Zieltext gefunden werden kann.

2. Anzeigeverfahren nach Anspruch 1, das weiterhin folgende Schritte aufweist:

—Entscheiden, ob die Schreibmarkenadresse (P$_4$) zwischen der Anzeigestartadresse (P$_1$) des Quellentextes oder der Anzeigestartadresse (P$_2$) des Zieltextes und einer Anzeigeendadresse des Quellen- oder Zieltextes liegt oder nicht,

—Verschieben der Anzeigestartadresse (P$_1$, P$_2$) des Quellen- oder Zieltextes, um einen vorgegebenen Wert, wenn die Schreibemarkenadresse (P$_4$) nicht zwischen der Startadresse (P$_1$, P$_2$) und der Endadresse liegt;

—Entscheiden, ob die Adresse des Ziel- oder Quellensatzelements, dessen Identifikator mit dem des Quellen- oder Zielsatzelements unter der Schreibmarkenadresse (P$_4$) übereinstimmt, zwischen der Anzeigestartadresse (P$_1$) und der Anzeigeendadresse des Ziel- oder Quellentextes liegt oder nicht, wenn die Schreibmarke auf dem ersten Anzeigebereich (51) liegt, und Entscheiden, ob dieselbe Adresse des Zielsatzelements zwischen der Anzeigestartadresse (P$_1$) und der Anzeigeendadresse des Quellentextes liegt, wenn die Schreibmarke auf dem ersten oder zweiten Anzeigebereich (31, 33) liegt, und

—Verschieben der Anzeigestartadresse (P$_1$, P$_2$) des Ziel- oder Quellentextes um einem vorgegebenen Wert, wenn die obengenannte Adresse des Ziel- oder Quellensatzelements nicht zwischen der Anzeigestartadresse und der Anzeigeendadresse liegt.

3. Anzeigeverfahren nach Anspruch 2, das weiterhin folgende Schritte aufweist:

—Abspeichern des Identifikators des Satzelements unter der Schreibmarkenadresse (P$_4$) im Parameterbereich (33) des Speichers (3), und

—Anzeigen des Satzelementes, dessen Identifikator (ID) im Parameterbereich (33) des Speichers (3) gespeichert ist, in einer sich vom anderen Text optisch unterscheidenden Weise.

4. Anzeigeverfahren nach einem der Ansprüche 1 bis 3, das weiterhin einen Schritt zum Ändern der Position im Zieltext oder der Inhalte der angezeigten Zielsatzelemente aufweist.

5. Anzeigeverfahren nach einem der Ansprüche 1 bis 4, dadurch gekennzeichnet, daß als die maschinellen Verarbeitungsmittel ein Hauptrechner (90 dient.

**Revendications**

1. Procédé de visualisation pour des systèmes de traduction automatique, dans lequel le traitement de traduction est exécuté dans des moyens de traitement, comportant les étapes suivantes consistant à:

(a) diviser une phrase dans un langage source en éléments de phrase source ayant certains rôles syntaxiquement ou sémantiquement,

(b) affecter des identifications (ID) aux éléments de phrase source respectifs, et des identifications de séparation (ESC) entre lesdits éléments de phrase respectifs ou entre des phrases,

(c) diviser une phrase dans un langage cible, qui a été traduite depuis ladite phrase de langage source, en éléments de phrase cible ayant les mêmes significations linguistiques que les éléments de phrase source,

(d) affecter les mêmes identifications (ID) aux éléments de phrase cible respectifs, et des identifications de séparation (ESC), telles qu'affectées au langage source,

(e) mettre en mémoire des parties correspondantes des deux textes dans des zones de texte source et cible respectives (31, 32) d'une mémoire (3) de telle manière que sur une adresse,

(e1) pour un caractère d'un élément de phrase, un code caractère est mémorisé conjointement avec un bit indicateur D1 possédant une première valeur, une identification d'élément de phrase ou numéro de phrase est mis en mémoire conjointement avec un bit indicateur D1 possédant une seconde valeur, et est mis en mémoire conjointement avec un second bit indicateur D2 indiquant si oui ou non l'élément de phrase correspondant a été révisé,

(f) mettre en mémoire une adresse de départ de visualisation (P$_1$) d'un texte source, une adresse de départ de visualisation ($P_2$) du texte cible et le numéro de phrase ($P_5$) et l'identification ($P_6$) d'un élément de phrase à visualiser d'une manière optiquement différente de l'autre texte dans une zone paramètre (33) de la mémoire (3),

(g) mettre en mémoire une adresse curseur ($P_4$) d'une curseur dans la zone de texte source (31) ou la zone de texte cible (32) dans la zone paramètre (33) de la mémoire (3) lorsque le curseur se trouve sur une première zone de visualisation (51) allouée au texte source ou sur une seconde zone de visualisation (52) allouée au langage cible de l'ensemble de visualisation (5),

(h) afficher le texte mis en mémoire dans la zone de texte source (31) sur la première zone de visualisation (51) et afficher le texte en mémoire dans la zone de texte cible (32) sur la seconde zone de visualisation (52) de l'ensemble de visualisation au moyen des adresses de départ de visualisation ($P_1$ et $P_2$), et

(i) afficher des éléments de phrase correspondants du texte source et du texte cible qui ont l'identification conservée dans la zone paramètre (33) de la mémoire (3) d'une manière optiquement différente de l'autre texte, de telle sorte que ces éléments de phrase soient identifiés sur la base de la position du curseur, et les numéros de phrase ($P_5$) et les identifications d'élément de phrase (ID) de ceux-ci sont respectivement placés dans le numéro de phrase affiché différemment optiquement ($P_5$) et les identifications d'élément de phrase affichées différemment optiquement ($P_6$) de sorte que l'adresse de l'élément de phrase affiché différemment optiquement dans le texte cible puisse être trouvée.

2. Procédé de visualisation selon la revendication 1, comportant en outre les étapes suivantes consistant à:

—décider si oui ou non l'adresse curseur ($P_4$) se trouve entre l'adresse de départ de visualisation ($P_1$) du texte source ou l'adresse de départ de visualisation ($P_2$) du texte cible et une adresse de fin de visualisation du texte source ou du texte cible;

—décaler l'adresse de départ de visualisation ($P_1$, $P_2$) du texte source ou du texte cible d'une valeur prédéterminée lorsque l'adresse curseur ($P_4$) ne se trouve pas entre l'adresse de départ ($P_1$, $P_2$) et l'adresse de fin;

—décider si oui ou non l'adresse de l'élément de phrase cible ou source ayant la même identification que celle de l'élément de phrase source ou cible a l'adresse curseur ($P_4$) se trouve entre l'adresse de départ de visualisation ($P_1$) et l'adresse de fin de visualisation du texte cible ou source, lorsque le curseur se trouve sur la première zone de visualisation (51), et décider si la même adresse de l'élément de phrase cible se trouve entre l'adresse de départ de visualisation ($P_1$) et l'adresse de fin de visualisation du texte source lorsque le curseur se trouve sur la première ou seconde zone de visualisation (31, 32), et

—décaler l'adresse de départ de visualisation ($P_1$, $P_2$) du texte cible ou source d'une valeur prédéterminée lorsque l'adresse précitée de l'élément de phrase cible ou source ne se trouve pas entre l'adresse de départ de visualisation et l'adresse de fin de visualisation.

3. Procédé de visualisaion selon la revendication 2, comportant en outre les étapes consistant à:

—mettre en mémoire l'identification de l'élément de phrase à l'adresse curseur ($P_4$) dans la zone paramètre (33) de la mèmoire (3), et

—afficher l'élément de phrase qui a son identification (ID) conservée dans la zone paramètre (33) de la mémoire (3) d'une manière optiquement différente de l'autre texte.

4. Procédé de visualisation selon une des revendications 1 à 3, comportant en outre l'étape de modification de la position dans le texte cible ou du contenu de l'élement de phrase cible affiché.

5. Procédé de visualisation selon une des revendications 1 à 4, caractérisé en ce qu'un calculateur hôte (9) est utilisé en tant que moyens de traitement.

# FIG. 1

**FIG. 2(A)**

| ESC | 5 | ESC | 1 | I | ESC | 4 | USUALLY | ESC | 5 | GO | ESC |

| 3 | TO | ESC | 3 | SCHOOL | ESC | 2 | BY | ESC | 2 | BUS, | ESC | 6 |

| BUT | ESC | 9 | YESTERDAY | ESC | 7 | I | ESC | ------- | --------- |

**FIG. 2(B)**

| ESC | 5 | ESC | 1 | WATAKUSHIWA | ESC | 2 | BASUNIYOTTE | ESC |

| 3 | GAKKOE | ESC | 4 | ITSUMO | ESC | 5 | IKU, | ESC | 6 |

| SHIKASHI, | ESC | 7 | WATAKUSHIWA | -------- | ----- |

## FIG. 3(A)

## FIG. 3(B)

## FIG. 3(C)

| P₁ | DISPLAY START ADDRESS OF ENGLISH TEXT |
|----|----|
| P₂ | DISPLAY START ADDRESS OF JAPANESE TEXT |
| P₃ | CURSOR INDICATOR |
| P₄ | CURSOR ADDRESS |
| P₅ | HIGHLIGHTED SENTENCE NUMBER |
| P₆ | HIGHLIGHTED PHRASAL ELEMENT ID |

3

## FIG. 4(A)

9 bits

| | | |
|---|---|---|
| 1 | / | 5 |
| 1 | 0 | 1 |
| 0 | | I |
| 1 | 0 | 4 |
| 0 | | U |
| 0 | | S |
| 0 | | U |
| 0 | | A |
| 0 | | L |
| 0 | | L |
| 0 | | Y |
| 1 | 0 | 5 |
| 0 | | G |
| 0 | | O |
| 1 | 0 | 3 |
| 0 | | T |
| 0 | | O |
| 1 | 0 | 3 |
| 0 | | S |
| 0 | | C |
| 0 | | H |
| 0 | | O |
| 0 | | O |
| 0 | | L |
| 1 | 0 | 2 |
| 0 | | B |
| 0 | | Y |
| 1 | 0 | 2 |
| 0 | | B |
| 0 | | U |
| 0 | | S |
| 0 | | , |
| 1 | 0 | 6 |
| 0 | | B |
| 0 | | U |
| 0 | | T |
| 1 | 0 | 9 |
| 0 | | Y |
| 0 | | E |
| 0 | | S |
| 0 | | T |

17 bits

| | | |
|---|---|---|
| 1 | / | 5 |
| 1 | 0 | 1 |
| 0 | | WATAKUSHI |
| 0 | | WA |
| 1 | | 2 |
| 0 | | BA |
| 0 | | SU |
| 0 | | NI |
| 0 | | YO |
| 0 | | T |
| 0 | | TE |
| 1 | 0 | 3 |
| 0 | | GAK |
| 0 | | KO |
| 0 | | E |
| 1 | 0 | 4 |
| 0 | | I |
| 0 | | TSU |
| 0 | | MO |
| 1 | 0 | 5 |
| 0 | | I |
| 0 | | KU |
| 0 | | , |
| 1 | 0 | 6 |
| 0 | | SHI |
| 0 | | KA |
| 0 | | SHI |
| 0 | | , |
| 1 | 0 | 7 |
| 0 | | WATAKUSHI |
| 0 | | WA |

## FIG. 4(B)

| | | |
|---|---|---|
| 1 | / | 5 |
| 1 | 0 | 1 |
| 0 | | WATAKUSHI |
| 0 | | WA |
| 1 | 0 | 4 |
| 0 | | I |
| 0 | | TSU |
| 0 | | MO |
| 1 | 0 | 2 |
| 0 | | BA |
| 0 | | SU |
| 0 | | NI |
| 0 | | YO |
| 0 | | T |
| 0 | | TE |
| 1 | 0 | 3 |
| 0 | | GAK |
| 0 | | KO |
| 0 | | E |
| 1 | 0 | 5 |
| 0 | | I |
| 0 | | KU |
| 0 | | , |
| 1 | 0 | 6 |
| 0 | | SHI |
| 0 | | KA |
| 0 | | SHI |
| 0 | | , |
| 1 | 0 | 7 |
| 0 | | WATAKUSHI |
| 0 | | WA |

## FIG. 4(C)

| | | |
|---|---|---|
| 1 | / | 5 |
| 1 | 0 | 1 |
| 0 | | WATAKUSHI |
| 0 | | WA |
| 1 | 0 | 4 |
| 0 | | I |
| 0 | | TSU |
| 0 | | MO |
| 1 | 1 | 2 |
| 0 | | BA |
| 0 | | SU |
| 0 | | DE |
| 1 | 0 | 3 |
| 0 | | GA |
| 0 | | K |
| 0 | | KO |
| 1 | 0 | E |
| 0 | | I |
| 0 | | KU |
| 0 | | , |
| 1 | 0 | 6 |
| 0 | | SHI |
| 0 | | KA |
| 0 | | SHI |
| 0 | | , |
| 1 | 0 | 7 |
| 0 | | WATAKUSHI |
| 0 | | WA |

# FIG. 5

m₁

I usually go to school **by**
**bus**, but yesterday I walked
to school. He -----

n₁

53

51

WATAKUSHI WA **BASUNIYOTTE**
GAKKO E ITSUMO IKU, SHIKASHI
WATAKUSHI WA KINOU ARUITA.
KARE WA -----

n₂

52

m₂

# FIG. 11

| ESC | ESC | 5 | 1 | 4 | 2 | ESC | BASUDE | ESC | 3 | 5 |

A

B

EP 0 081 784 B1

FIG. 6

7

# FIG. 7

```
        ┌─────────┐
        │  START  │
        └────┬────┘
             │
        ┌────┴────┐
        │  I ← 1  │────101
        └────┬────┘
             │
      ┌──────┴──────┐
      │  RECEIVE A  │
      │  BYTE (X)   │────102
      └──────┬──────┘
             │              103
           ╱─┴─╲              YES      ┌────────┐
          ╱ END ╲─────────────────────│  STOP  │
          ╲ OF TEXT ╱                 └────────┘
           ╲  ?  ╱
            ╲─┬─╱
             │NO          104
           ╱─┴─╲             YES
          ╱ ESC ╲──────────────────┐
          ╲ CODE ╱                 │
           ╲ ? ╱             ┌──────┴──────┐
            ╲┬╱              │  RECEIVE    │
             │NO    107      │  NEXT       │────105
             │               │  BYTE (Y)   │
      ┌──────┴──────┐        └──────┬──────┘
      │ A(I)₁ ← 0   │        ┌──────┴──────┐
      │ A(I)₂₋₉ ← X │        │ A(I)₁ ← 1   │────106
      └──────┬──────┘        │ A(I)₂ ← 0   │
             │               │ A(I)₃₋₉ ← Y₂₋₅│
             │               └──────┬──────┘
             │                      │
             └──────────┬───────────┘
                        │
                 ┌──────┴──────┐
                 │ I ← I + 1   │────108
                 └──────┬──────┘
```

$A(I)_1 \leftarrow 0$
$A(I)_{2 \sim 9} \leftarrow X$

$A(I)_1 \leftarrow 1$
$A(I)_2 \leftarrow 0$
$A(I)_{3 \sim 9} \leftarrow Y_{2-5}$

8

## FIG. 8

FIG. 8

- 201: $F_1 \leftarrow 0 \quad F_2 \leftarrow 0$
- 202: $1 \rightarrow P_1$
- 203: $IMAX \leftarrow 1 + m_1 \times n_1$
- 204: $A(I)_1 = 1$ ?  — NO / YES
- 205: $F_1 \cdot F_2 = 1$ ?
- 207: DISPLAY THE CHARACTER $A(I)_{2\sim9}$ IN NORMAL MODE
- 208: $A(I+1)_1 = 1$ ? — YES / NO
- 209: $A(I)_{2\sim9} = P_5$ ? — NO / YES
- 210: $F_1 \leftarrow 1$
- 211: $F_1 \leftarrow 0$
- 212: $A(I)_{3\sim9} = P_6$ ? — NO / YES
- 213: $F_2 \leftarrow 1$
- 214: $F_2 \leftarrow 0$
- 206: DISPLAY $A(I)_{2\sim9}$ IN HIGH LIGHTED MODE
- 215: DISPLAY A BLANK
- 216: $I \leftarrow I + 1$
- 217: $I < IMAX$ — YES / NO
- 218: PROCESSING FOR DISPLAYING JAPANESE TEXT

## FIG. 9

START

301

$P_4 > P_1$ — NO → 302 $P_1 \leftarrow P_1 - m_1$

YES

303

$P_4 \leq P_1 + m_1 \times n_1$

304 $P_1 \leftarrow P_1 + m_1$

305

SCAN ENGLISH TEXT AREA
$P_5 \leftarrow$ RIGHTMOST SENTENCE NO. WORD BEFORE CURSOR
$P_6 \leftarrow$ RIGHTMOST PHRASAL ELEMENT ID WORD
    BEFORE CURSOR

SCAN JAPANESE TEXT AREA
$X \leftarrow$ ADDRESS OF THE FIRST WORD IN THE PHRASAL
    ELEMENT TO BE HIGHLIGHTED

307     306

$X > P_2$ — NO → 308 $P_2 \leftarrow P_2 - m_2$

YES

309

NO

$X < P_2 + m_2 \times n_2$

$P_2 \leftarrow P_2 + m_2$ — 310

YES

STOP

EP 0 081 784 B1

## FIG. 10

START

F ← 0    401

I ← 1    402

403 — END OF TEXT ?  → YES → STOP

NO  404

$B(I)_1 = 1?$ → NO → 405 → $F = 1?$ → NO

YES  407

408 — YES ← $B(I+1)_1 = 1?$

$F = 1?$ → YES → SEND $B(I)_{2\sim17}$  406

SEND TWO ESC CODES

NO  410

$F = 1?$ → YES → SEND AN ESC CODE  411

SEND $B(I)_{2\sim17}$  409

NO

SEND $B(I)_{3\sim17}$  412

413 — $B(I)_2 = 1?$ → 414 → F ← 1  415 → SEND AN ESC CODE

416 — F ← 0

I ← I + 1    417

11